# EUROPEAN PATENT APPLICATION

(11) **EP 4 836 389 A1**
(43) Date of publication of application: **04.11.2026**
(21) Application number: 26175257.0
(22) Date of filing: 28.04.2026
(51) Int. Cl.: H04L 69/22, G01S 5/00, H04L 61/00, H04W 4/02, H04W 4/40

(54) **METHOD AND DEVICE FOR COMMUNICATION IN A COOPERATIVE INTELLIGENT TRANSPORT SYSTEM**

(30) Priority: 30.04.2025 GB 202506590
(71) Applicant: Canon Kabushiki Kaisha, Tokyo 146-8501 (JP)
(72) Inventor: NASSOR, Eric, 35517 Cesson-Sévigné Cedex (FR); BELLESORT, Romain, 35517 Cesson-Sévigné Cedex (FR); RUELLAN, Hervé, 35517 Cesson-Sévigné Cedex (FR)
(74) Representative: Casalonga France

(57) **Abstract**

According to some embodiments of the disclosure, it is provided a method of communication in an Intelligent Transport System, ITS, the method comprising, at an ITS station associated with a mobile object: acquiring status information relating to the mobile object from an element of a perception message received from an ITS station generating perception messages, the element being identifiable using association information.

## Description

### FIELD OF THE INVENTION

The present invention generally relates to Cooperative Intelligent Transport Systems (C-ITS), and more specifically to methods and devices for enabling accurate positioning of mobile objects susceptible to move in areas where GNSS connectivity is degraded or absent.

### BACKGROUND OF THE INVENTION

Cooperative Intelligent Transport Systems (C-ITS) aim to enhance road safety, traffic efficiency, and the overall mobility experience. While primarily associated with road transport, C-ITS services extend beyond this scope, encompassing rail, water, and air transport, including navigation systems. More broadly, C-ITS can be defined as the application of information and communication technologies (ICT) across various transport domains to enable seamless and intelligent mobility solutions. These diverse implementations typically rely on radio communication services and specialized technologies. To ensure interoperability and regulatory compliance, C-ITS deployments are governed by region-specific standards. In Europe, the European Telecommunications Standards Institute (ETSI) is responsible for developing the specifications that define the governing standards for C-ITS.

At the core of C-ITS is cooperation, achieved through the exchange of standardized messages, known as ITS messages, among ITS stations (ITS-Ss). These ITS-Ss include vehicles, Roadside Units (RSUs), and Vulnerable Road Users (VRUs) carrying ITS-enabled devices such as smartphones, GPS units, smartwatches, or cyclist gear. Additionally, ITS-Ss encompass infrastructure elements like back-end systems and traffic management centers. C-ITS supports various types of communication, including vehicle-to-vehicle (V2V) interactions, enabling direct exchanges between all road users, such as car-to-car communication. It also facilitates vehicle-to-infrastructure (V2I) and infrastructure-to-vehicle (I2V) communications, allowing vehicles to connect with fixed locations such as traffic lights, road sensors, and control centers. These message exchanges occur over wireless networks, utilizing advanced communication technologies such as 3GPP LTE-Advanced Pro, 3GPP 5G, and IEEE 802.11p. Key ITS messages include, but are not limited to, Cooperative Awareness Messages (CAMs), Collective Perception Messages (CPMs), and Decentralized Environmental Notification Messages (DENMs). The ITS station that transmits a message is referred to as the "originating" ITS-S, while the receiving entity is termed the "receiving" ITS-S.

C-ITS plays a pivotal role in enabling the deployment of automated vehicles by facilitating real-time data exchange between vehicles, infrastructure, and other road users. Through ITS messages, automated vehicles can share their perception data, such as detected objects, road conditions, and traffic dynamics, with surrounding ITS stations. This cooperative perception enhances situational awareness beyond the limitations of onboard sensors, mitigating issues like occlusions and blind spots. Furthermore, ITS messages like CAMs and CPMs allow vehicles to anticipate road events, optimize decision-making, and coordinate manoeuvres, significantly improving safety and efficiency. With advancements in vehicle-to-everything (V2X) communication technologies, such as 5G and IEEE 802.11p, C-ITS supports key automated vehicle functions, including platooning, adaptive cruise control, and intersection management. These capabilities pave the way for fully connected and automated mobility solutions.

Despite its advantages, the deployment of automated vehicles within C-ITS faces critical challenges, particularly regarding localization accuracy. A major issue arises when vehicles enter areas with poor GNSS connectivity, such as tunnels, urban canyons, underground parking garages, or dense forests, leading to degraded positioning performance. Automated driving systems rely on precise localization to navigate safely, maintain lane positioning, and interact effectively with other road users. Any deviation in positioning can result in operational failures, increased safety risks, or disruptions in autonomous driving functions such as lane-keeping, adaptive cruise control, and automated overtaking.

Several alternative localization techniques have been proposed to mitigate GNSS disruptions, each with its own limitations. Map-matching algorithms, which compare vehicle sensor data with high-definition maps, can help refine positioning but are less effective in dynamic environments where road layouts change frequently. Sensor fusion, which integrates data from LiDAR, cameras, and inertial measurement units (IMUs), offers improved accuracy but requires high computational power and may struggle in adverse weather conditions such as heavy rain, fog, or snow. Cooperative localization, which enhances positioning accuracy through vehicle-to-vehicle (V2V) and vehicle-to-infrastructure (V2I) communications, relies on the availability and reliability of surrounding ITS-equipped entities, making it less effective in sparsely connected areas. Additionally, a fundamental challenge remains: how to efficiently transmit precise position data to vehicles in real time to help them maintain a high level of automation. Delays or inaccuracies in shared localization data can reduce trust in cooperative positioning, potentially causing automated vehicles to revert to lower autonomy levels, increasing reliance on human intervention.

Other significant drawbacks further complicate localization within C-ITS. Cybersecurity concerns pose a major risk, as incorrect positioning data, whether due to malicious attacks (e.g., GNSS spoofing, jamming, or false ITS messages) or system errors, could lead to severe traffic incidents. Communication constraints, such as latency, network congestion, and signal interference, can disrupt cooperative localization, affecting automated driving functions like lane-keeping, manoeuvre planning, and collision avoidance. Privacy and data-sharing challenges also arise, as continuous exchange of position-related data between vehicles and infrastructure raises concerns about data security and user anonymity. Furthermore, high deployment and maintenance costs for roadside units (RSUs) and other required infrastructure limit the scalability of cooperative localization, particularly in rural or economically constrained areas.

Thus, there is a need for an enhanced method to address these localization challenges for the widespread deployment of automated vehicles in C-ITS, ensuring both safety and reliability in real-world conditions.

### SUMMARY

In accordance with a first aspect of the invention, there is provided a method of communication in an Intelligent Transport System, ITS, the method comprising, at an ITS station associated with a mobile object: acquiring status information relating to the mobile object from an element of a perception message received from an ITS station generating perception messages, the element being identifiable using association information.

In accordance with a second aspect of the invention, there is provided a method of communication in an Intelligent Transport System, ITS, the method comprising, at an ITS station generating perception messages: sending a perception message including an element carrying status information relating to a mobile object, the element being identifiable by an ITS station associated with the mobile object using association information.

Accordingly, a mobile object receiving a perception message reporting on numerous perceived objects can efficiently recognize its own data, relying on the association information, without undergoing complex processing, and extract its own position, especially when it moves through an area where GNSS connectivity is degraded or absent.

In some embodiments, the status information may include a position of the mobile object, the position being within an area where GNSS connectivity is degraded or absent.

In some embodiments, the position included in the status information may be more accurate than a position determined by the mobile object, based, in part or in whole, on GNSS-based techniques.

In some embodiments, the association information may be information that allows identification of an element of a perception message corresponding to the mobile object.

In some embodiments, the association information may be information that is generated by either the ITS station associated with the mobile object or the ITS station generating perception messages, before being shared with the other, or may be information that unambiguously identifies the ITS station associated with the mobile object or the mobile object itself and is directly used by the ITS station generating perception messages.

In some embodiments, the association information may be contained in, referenced by, or referencing the element corresponding to the mobile object within the perception message.

In some embodiments, the association information may be at least one of: an identifier of the ITS station associated with the mobile object used to send ITS messages, a newly defined identifier to be used in scenarios where GNSS connectivity is degraded or absent, or a past trajectory information relating to the mobile object.

In some embodiments, the element corresponding to the mobile object within the perception message may be either a data frame individually describing the mobile object, a data frame globally describing the mobile object along with other perceived objects, or a data field within the perception message.

In some embodiments, the perception message may be a basic ITS CPM message as specified in ETSI TS 103 324 (v2.1.1, 2023), or an enhanced ITS CPM message retaining the structure of the basic CPM message, while incorporating one or more additional data elements.

In some embodiments, acquiring status information may comprise extracting the status information as is from the received perception message, or applying processing to the content of the element corresponding to the mobile object.

In some embodiments, the method according to the first aspect may further include sending a message for requesting positioning assistance, in response to determining a degradation or absence of GNSS connectivity.

In some embodiments, determining a degradation or absence of GNSS connectivity may comprise receiving a basic or an enhanced DENM message, as specified in ETSI TS 103 831 (V2.2.1, 2024), the message including information elements indicating the presence of an area where GNSS connectivity is degraded or absent.

In some embodiments, the method according to the first aspect may further include, after sending the message for requesting positioning assistance and subsequently receiving a perception message from the ITS station generating perception messages, sending a reply message to the ITS station generating perception messages indicating whether an association with the ITS station generating perception messages has been established.

In some embodiments, the method according to the second aspect may further include receiving a message for requesting positioning assistance from the ITS station associated with the mobile object, in response to sending a service announcement message.

In some embodiments, the service announcement message may be a basic or an enhanced IVIM message, as specified in ETSI TS 103 301 (V2.2.2, 2024), the message including information elements relating to the presence of an area where GNSS connectivity is degraded or absent.

In some embodiments, the method according to the second aspect may further include, after receiving the message for requesting positioning assistance, sending a reply message to the ITS station associated with the mobile object indicating whether an association with the ITS station associated with the mobile object has been established.

In some embodiments, the association information may be generated by the ITS station associated with the mobile object, and shared, using the reply message, with the ITS station generating perception messages.

In some embodiments, the association information may be generated by the ITS station generating perception messages, and shared, using the reply message, with the ITS station associated with the mobile object.

In accordance with a third aspect of the invention, there is provided a processing device configured to perform the method according to any aspect or embodiment described above.

Any feature in one aspect of the invention may be applied to other aspects of the invention, in any appropriate combination. In particular, method aspects may be applied to apparatus/device/unit aspects, and vice versa.

Furthermore, features implemented in hardware may be implemented in software, and vice versa. Any reference to software and hardware features herein should be construed accordingly. For example, in accordance with other aspects of the invention, there are provided a computer program comprising instructions which, when the program is executed by a processing unit, cause the processing unit to carry out the method of any aspect or example described above and a computer readable storage medium carrying the computer program.

### BRIEF DESCRIPTION OF THE DRAWINGS

Embodiments of the invention will now be described, by way of example only, and with reference to the following drawings in which:
**Figure 1** illustrates an example of an ITS in which embodiments of the invention may be implemented,
**Figure 2** is a flowchart of a method for accurately positioning mobile objects moving in areas where GNSS connectivity is degraded or absent, according to embodiments of the invention,
**Figure 3** is a flowchart of a method for enabling accurate positioning of mobile objects moving in areas where GNSS connectivity is degraded or absent, according to some embodiments of the invention,
**Figure 4** is a flowchart of a method for enabling accurate positioning of mobile objects moving in areas where GNSS connectivity is degraded or absent, according to other embodiments,
**Figure 5** is a flowchart of a method for obtaining association information for use in enabling accurate positioning of mobile objects moving in areas where GNSS connectivity is degraded or absent, according to some embodiments,
**Figure 6** is a flowchart of a method for obtaining association information for use in enabling accurate positioning of mobile objects moving in areas where GNSS connectivity is degraded or absent, according to other embodiments,
**Figure 7** is a flowchart of a method for enabling accurate positioning of mobile objects moving in areas where GNSS connectivity is degraded or absent, according to further embodiments,
**Figure 8** illustrates the structure of an enhanced IVIM message, according to embodiments of the invention,
**Figure 9** illustrates the structure of an enhanced DENM message, according to embodiments of the invention,
**Figure 10** illustrates the structure of an enhanced MCM message, according to embodiments of the invention,
**Figure 11** illustrates the structure of an enhanced CPM message, according to embodiments of the invention,
**Figure 12** illustrates the structure of an enhanced CAM message, according to embodiments of the invention,
**Figure 13** illustrates the hardware structure of an ITS station, in which the invention may be implemented, and
**Figure 14** illustrates an example of an ITS entity, in which the invention may be implemented.

### DETAILED DESCRIPTION OF EMBODIMENTS

Embodiments of the present invention provide methods, devices, and computer program products for enabling accurate positioning of mobile objects moving in areas where the Global Navigation Satellite System (GNSS) connectivity is degraded or absent, such as tunnels, urban canyons, underground parking garages, or dense forests, by leveraging ITS (Intelligent Transport System) messages sent either in a broadcast or unicast manner to share perception information about the surrounding environment. To accomplish this, two main steps are carried out: in the first step, association information is obtained for use in identifying an element corresponding to the mobile object within a perception message; in the second step, status information relating to the mobile object is acquired from a received perception message based on the association information. The embodiments of the invention are not limited to a specific type of ITS message, as various ITS messages can be used to perform each of the two steps. For example, the obtaining step may be executed using a first type of ITS message, while the acquiring step may use a second type of ITS message. Alternatively, the obtaining step and the acquiring step may both use the same type of ITS message. By relying on standardized ITS messages, the embodiments of the present invention do not necessarily require major modifications or additional hardware for implementation within an ITS system.

Methods, devices, and computer program products according to the various embodiments of the invention can be implemented in any ITS system where ITS messages are exchanged between ITS stations to share perception data. This perception data preferably relates to the surrounding environment of the originating ITS station.

The ITS system may be a terrestrial ITS system that is designed to improve the safety, efficiency, and management of ground transportation networks. It utilizes a range of technologies, including sensors, cameras, and communication devices, installed on roads and vehicles to monitor and manage traffic conditions in real-time. Key applications include adaptive traffic signal control, real-time traffic updates, and vehicle-to-infrastructure communication. Terrestrial ITS systems aim to optimize traffic flow, reduce congestion, enhance road safety, and support smart city initiatives by integrating with other urban infrastructure.

The ITS system may be a water ITS system that focuses on enhancing maritime transportation through advanced technology and communication networks. This system employs sensors, radar, and GPS to monitor and manage vessel movements, navigation, and environmental conditions on the water. It facilitates real-time communication between ships and shore-based control centres, supporting applications such as collision avoidance, port traffic management, and environmental monitoring. Water ITS systems aim to improve maritime safety, operational efficiency, and environmental protection by providing better situational awareness and coordination.

The ITS system may be an aerial ITS system that is designed to optimize air traffic management and enhance the safety and efficiency of aviation operations. This system uses advanced technologies such as radar, satellite communication, and data analytics to monitor aircraft movements, manage air traffic, and ensure safe and efficient flight operations. Key applications include air traffic control, aircraft collision avoidance, and real-time weather updates. Aerial ITS systems aim to improve air traffic flow, reduce delays, and enhance safety in increasingly congested airspace.

For illustration purposes only, the following description will refer to a terrestrial ITS system comprising multiple ITS stations installed on roads, vehicles, and vulnerable ITS users to share perception data through ITS messages, with mobile objects, such as vehicles, trucks, motorcycles, or bicycles, are susceptible to move in areas where GNSS connectivity is degraded or absent, such as tunnels, urban canyons, underground parking garages, or dense forests. However, it will be readily understood by those skilled in the art that the various embodiments of the invention may apply to other types of ITS systems. Generally, the invention may be integrated into any ITS system where mobile objects are susceptible to move in areas where GNSS connectivity is degraded or absent.

In the following description, the expression 'ITS message' is used to designate any communication or data packet exchanged within an ITS network. This encompasses a variety of message types, including those used for vehicle-to-vehicle (V2V), vehicle-to-infrastructure (V2I), and vehicle-to-everything (V2X) communications. ITS messages carry essential information such as vehicle status, perceived object, sensor data, traffic conditions, and safety alerts, facilitating real-time decision-making and coordination among ITS stations. These messages are crucial for ensuring the smooth operation and safety of the transportation system, enabling efficient data sharing and interaction across the network. In the context of the ETSI (European Telecommunications Standards Institute) standards, ITS messages encompass a variety of communication types that facilitate different aspects of intelligent transport systems. Examples of ITS messages that are compatible with embodiments of the invention include, but are not limited to:
1. CPM (Collective Perception Message): CPMs are used to share information about the environment as perceived by the sensors of an ITS station, typically a vehicle. These messages include data about detected objects, such as other vehicles, pedestrians, or obstacles, that are within the sensor's range. CPMs enhance situational awareness by allowing vehicles and infrastructure to "see" beyond their line of sight, thereby improving safety and enabling advanced cooperative driving functions.
2. CAM (Cooperative Awareness Message): CAMs are periodically sent by vehicles to broadcast their current status, including position, speed, heading, and other dynamic data. These messages are fundamental for creating a cooperative environment where vehicles and infrastructure can maintain real-time awareness of each other's presence and movement. CAMs are essential for applications like lane change assistance, adaptive cruise control, and collision avoidance.
3. MCM (Manoeuvre Coordination Message): MCMs are used to support cooperative manoeuvres between vehicles, such as lane changes, merging, or platooning. These messages convey information about a vehicle's intended actions and its willingness to cooperate with other vehicles. MCMs help facilitate smooth, coordinated manoeuvres in complex traffic scenarios, improving traffic flow and reducing the risk of collisions.
4. DENM (Decentralized Environmental Notification Message): DENMs are event-triggered messages that inform nearby vehicles and infrastructure about specific incidents or hazards, such as accidents, roadworks, or slippery roads. These messages are critical for alerting road users to unexpected events and enabling timely responses, thereby enhancing road safety.
5. IVIM (In Vehicle Information Message): IVIMs are broadcast by roadside infrastructure to provide vehicles with essential road and traffic-related information, such as speed limits, lane configurations, temporary roadworks, and hazardous conditions. These messages help ensure that vehicles, including automated ones, receive real-time regulatory and advisory updates, improving compliance with traffic rules and enhancing situational awareness. IVIMs play a crucial role in supporting intelligent driving decisions, optimizing traffic flow, and increasing road safety by delivering critical infrastructure-based information directly to vehicles.

In the following description, the expression 'perception message' refers to any ITS message that conveys detailed perception information about the surrounding environment. This feature is essential for enabling roadside units and vehicles to share environmental data with other ITS stations, thereby improving situational awareness, enhancing safety, and supporting decision-making in cooperative driving scenarios. An example of a perception message is the CPM message.

In the following description, the expression 'enhanced ITS message' is used to designate an ITS message that retains the structure of its respective basic ITS message, such as CPM, CAM, or MCM, while incorporating one or more additional data elements. The one or more additional data elements are proposed according to embodiments of the invention to facilitate the easy determination of the position of a mobile object when it is moving in an area with degraded or absent GNSS connectivity. For example, an enhanced CAM message, used to obtain the association information in the first step, retains the structure of a basic CAM message according to ETSI standards while incorporating one or more additional data elements. In another example, an enhanced CPM message, used as perception message in the second step, retains the structure of a basic CPM message according to ETSI standards while incorporating one or more additional data elements.

In the following description, the expression 'mobile object' is used to designate any object capable of moving, including in areas with degraded or absent GNSS connectivity. Examples of mobile objects include, but are not limited to, vehicles, motorcycles, trucks, and bicycles. The mobile object may be either connected, equipped with an ITS station configured to transmit and/or receive ITS messages, or unconnected. In both cases, the mobile object can be detected and reported by other ITS stations, whether they are mounted on other mobile objects or roadside units. The various embodiments of the invention are particularly applicable to automated vehicles, as mobile objects, which are managed according to various levels of automation defined by the SAE (Society of Automotive Engineers) standards, specifically levels 3, 4, and 5. These levels define the degree of autonomy in the vehicle's operation and specify the level of driver involvement required. At SAE Level 3, the vehicle can perform all driving tasks within certain conditions, but the driver must remain ready to intervene if necessary. At Level 4, the vehicle can fully operate autonomously within specific operational design domains (ODD), such as predefined geographic areas, without the need for human intervention. Finally, at Level 5, the vehicle is fully autonomous and capable of performing all driving functions under all conditions without any need for driver input, rendering the human driver unnecessary for any part of the driving task.

In the following description, the expressions 'location' and 'position' are used interchangeably to indicate where a mobile object is situated within a given environment. The location can be represented in either a global coordinate system (e.g., latitude and longitude) or a local coordinate system (e.g., a relative position within a mapped environment). Among the various localization techniques, GNSS-based methods are considered the most effective due to their ability to provide high-precision, real-time positioning over large geographical areas, their widespread adoption in navigation systems, and their compatibility with multiple satellite constellations, such as GPS, Galileo, GLONASS, and BeiDou. Additionally, GNSS-based localization requires only a single receiver to determine position, making it a cost-effective solution with a small footprint and low power consumption, ideal for integration into various mobile and embedded systems. In the context of C-ITS, where the localization of objects is crucial for sharing perception data, ITS stations, whether mounted on roadside units or mobile objects, primarily rely on GNSS-based localization techniques. For instance, automated vehicles depend on GNSS-based solutions in combination with other methods, such as inertial measurement units (IMUs), which act as backup solutions to maintain accurate positioning when GNSS signals are weak or unavailable.

In the following description, the expressions 'area with degraded or absent GNSS connectivity' and 'GNSS-denied area' are used interchangeably to designate any area or environment or location where the Global Navigation Satellite System (GNSS) signals are either weak, intermittent, or completely unavailable. This can include areas such as tunnels, underground parking garages, urban canyons, dense forests, or regions with high-rise buildings that block satellite signals, making accurate positioning difficult or impossible for mobile objects relying on GNSS technology. In normal conditions, a GNSS system can provide a position with meter-level accuracy or even centimeter-level accuracy if it is improved by a RTK (Real-Time Kinematic) signal. In degraded conditions, the accuracy may decrease to several tens of meters, making the GNSS position unusable for guiding vehicles.

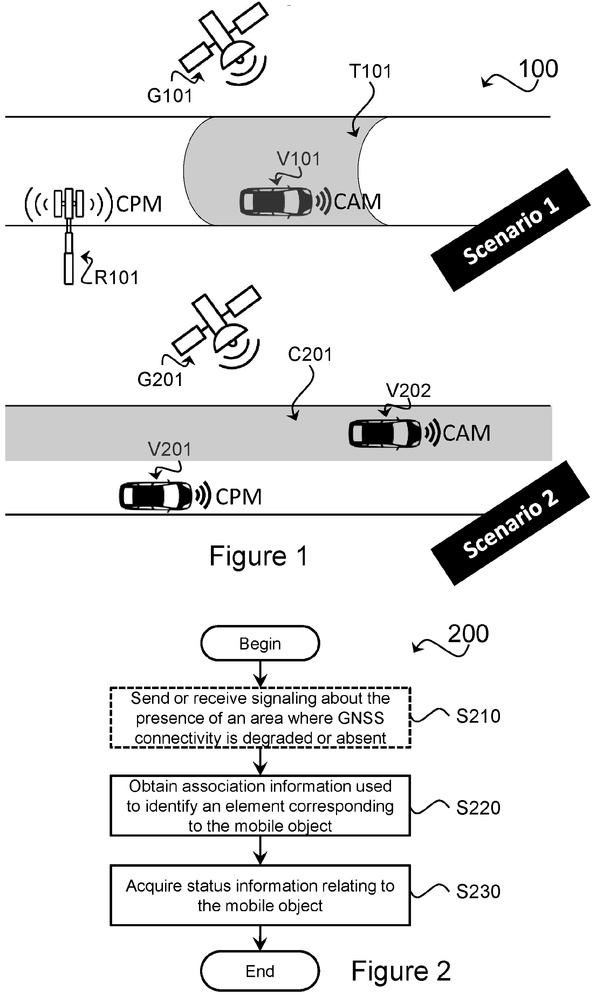

Figure 1 illustrates an example of an ITS 100 in which embodiments of the invention may be implemented. The ITS is integrated into road infrastructure that includes areas with degraded or absent GNSS connectivity where mobile objects, such as vehicles or motorcycles, are susceptible to travel. The ITS comprises multiple ITS stations capable of transmitting and/or receiving ITS messages. Typically, an ITS message is broadcast, allowing all ITS stations within the communication range of the originating ITS station to receive it. Of course, some types of ITS messages may be sent in a unicast manner. Generally, ITS stations can be categorized based on several factors, including their mobility status and the types of ITS messages they generate. Depending on mobility status, an ITS station may be installed on a mobile object, such as a vehicle, or embedded within a fixed roadside unit. In terms of message types, one ITS station may be authorized to send only CAM messages, while another ITS station may be limited to sending CPM messages. Furthermore, users and objects within the road infrastructure can participate in the ITS either actively or passively. Active participation occurs when users or objects process ITS messages through dedicated ITS stations with which they are equipped. Passive participation, on the other hand, involves users or objects being detected and reported as perceived objects by other ITS stations within the ITS. Figure 1 illustrates multiple communication scenarios that highlight the benefits of the invention in enabling accurate positioning of mobile objects moving in areas where GNSS connectivity is degraded or absent. In these multiple communication scenarios, the mobile objects are vehicles and the ITS messages are broadcast.

In the first communication scenario, which involves a vehicle traveling through a tunnel where GNSS connectivity is degraded or absent, the vehicle V101 is equipped with an ITS station that sends CAM messages detailing the vehicle's current status, including its position, speed, heading, and other dynamic data. Typically, CAM messages are transmitted only when the vehicle is powered on (e.g., started up), with a vehicle in motion being reported at a higher frequency than a stationary vehicle. In addition, CAM messages are periodically broadcast from a vehicle to other vehicles and infrastructure within its communication range, with a typical reporting frequency between 1 Hz and 10 Hz depending on the vehicle's motion. The vehicle V101 is further equipped with a GNSS receiver capable of leveraging signals from multiple satellite constellations G101 to determine the vehicle's position, which is then included in the generated CAM messages. Depending on the vehicle's level of autonomy, the determined position is used for driving purposes, supporting key automated functions such as path planning, localization, and collision avoidance. When outside the tunnel T101, the GNSS receiver maintains a stable communication link with GNSS satellites, providing an accurate and reliable vehicle position. However, as the vehicle enters the tunnel, GNSS signals become weak, intermittent, or completely unavailable, leading to degraded positioning accuracy or even total loss of localization. The broadcast of an inaccurate position in CAM messages can lead to misinterpretations and inconsistencies within the ITS environment, potentially compromising cooperative perception and decision-making among connected vehicles and infrastructure. Furthermore, when used for driving purposes, erroneous positioning data may negatively impact automated driving functions, such as lane-keeping, manoeuvre planning, adaptive cruise control, and collision avoidance, increasing the risk of operational failures and safety hazards.

The first communication scenario also involves a roadside unit that may be located inside the tunnel. The roadside unit R101 is equipped with multiple sensors designed to perceive its surrounding environment. The roadside unit R101 also includes an ITS station that sends CPM messages containing data about detected objects, such as other vehicles, pedestrians, or obstacles, within the sensors' range. The contained data about a detected object typically include the position, measurement time, velocity, and additional attributes such as object classification or dimensions, in addition to an identifier internally assigned by the roadside unit. This identifier may be periodically updated or reassigned based on system constraints, object re-detection events, or for privacy and security reasons. Among the detected objects is vehicle V101, which is equipped with an ITS station to send CAM messages. Typically, an object may be reported, using CPM messages, immediately upon initial detection to ensure that all relevant ITS stations are aware of its presence. After the initial report, updates, using CPM messages, on static objects are typically sent at longer intervals compared to dynamic objects. The interval may range from a few milliseconds to several seconds, depending on the object's relevance and the surrounding context. If the position of a static object changes (e.g., a parked vehicle starts moving), it may trigger an immediate update to alert other ITS stations.

Generally, in a situation where the vehicle V101 is reported as a detected object within a CPM message sent by the roadside unit R101, the vehicle V101 cannot easily determine which included data in the CPM message corresponds to itself without undergoing complex processing. This processing typically involves comparing, for each reported object in the CPM, the timestamped position of the detected object with the vehicle V101's own position at that timestamp. However, this approach can quickly become computationally intensive and memory-demanding, with a significant risk of errors, particularly in dense traffic or stop-and-go situations where multiple vehicles may have similar positions and movement patterns. In such cases, the received CPM may contain an accurate position of the vehicle V101, thanks to the roadside unit's high perception capabilities. However, this valuable information may not be effectively utilized by the vehicle V101, especially when traveling inside a tunnel where GNSS connectivity is degraded or absent, limiting its ability to validate its own position independently.

According to embodiments of the invention, association information used to identify the vehicle V101 within the CPM messages sent by the roadside unit R101 is obtained by both entities. This association information may be generated by one of them and then shared with the other entity. Once established, it is included in each CPM message generated by the roadside unit R101, specifically within the object perception data frame corresponding to the vehicle V101. In this way, the vehicle V101 can efficiently recognize its own data without undergoing complex processing. This approach is particularly beneficial when the vehicle V101 is inside a tunnel, as it enables the vehicle V101 to extract its position as determined by the roadside unit R101, compensating for degraded or absent GNSS connectivity.

In the second communication scenario, which involves two vehicles traveling through an urban canyon C201 on different road lanes, vehicles, such as vehicle V201, on a first lane maintain a stable communication link with GNSS satellites G201, ensuring accurate and reliable positioning. In contrast, vehicles, such as vehicle V202, on a second lane experience degraded or completely absent GNSS connectivity, making precise localization significantly more challenging. The vehicle V201, traveling on the first lane, is equipped with an ITS station that sends CAM messages detailing the vehicle's current status and CPM messages containing data about detected objects, such as other vehicles, pedestrians, or obstacles within the sensors' range. Among those sensors is a GNSS receiver that continuously provides an accurate position of vehicle V201, primarily because it travels on the first lane, benefiting from uninterrupted GNSS connectivity. In a CPM message generated by the vehicle V201, the position of each detected object can be represented as a relative position with respect to the absolute position of the vehicle V201, which is also included in the message. Alternatively, the vehicle V201 can compute the absolute position of each perceived object before directly embedding it in the generated CPM.

The second communication scenario also involves the vehicle V202, traveling on the second lane, which is equipped with an ITS station that sends CAM messages detailing the vehicle's current status and a GNSS receiver. However, due to the degraded or completely absent GNSS connectivity on the second lane, the GNSS receiver provides an inaccurate position of the vehicle V202. If the vehicle V202 partially or fully relies on this GNSS-derived position to determine its location for broadcasting in CAM messages, the reported position may lack accuracy. The dissemination of an inaccurate position in CAM messages can result in misinterpretations and inconsistencies within the ITS environment, potentially disrupting cooperative perception, impairing vehicle-to-vehicle coordination, and affecting critical decision-making processes among connected vehicles and infrastructure. While traveling through the urban canyon, the vehicle V202 is continuously located within the sensors' range of the vehicle V201. This may be achieved as the two vehicles are traveling in the same direction at substantially the same speed. This leads to a similar situation to that described in the first communication scenario where the vehicle V202 is reported as a detected object within a CPM message sent by the vehicle V201, with the vehicle V202 cannot easily determine which included data in the CPM message corresponds to itself without undergoing complex processing.

According to embodiments of the invention, association information used to identify the vehicle V202 within the CPM messages sent by the vehicle V201 is obtained by both entities. This association information may be generated by one of them and then shared with the other entity. Once established, it is included in each CPM message generated by the vehicle V201, specifically within the object perception data frame corresponding to the vehicle V202. In this way, the vehicle V202 can efficiently recognize its own data without undergoing complex processing. This approach is particularly beneficial when the vehicle V202 is inside an urban canyon, as it enables the vehicle V202 to extract its position as determined by the vehicle V201, compensating for degraded or absent GNSS connectivity.

Figure 2 is a flowchart of a method 200 for accurately positioning mobile objects moving in areas where GNSS connectivity is degraded or absent, according to some embodiments. The method of Figure 2 may be implemented in any processing device with the necessary resources to obtain association information to identify elements of a perception message that correspond to a mobile object, and to process a received perception message in order to extract status information relating to the mobile object. The processing device may be part of an ITS station equipped on the mobile object itself. Alternatively, the processing device may be part of, or embedded within, a remote-control centre or be hosted on a cloud computing platform.

At an optional step S210, the presence of areas where GNSS connectivity is degraded or absent is signalled. The presence of such areas may be signalled by the mobile object itself to other entities, including ITS stations generating perception messages. This is achievable by the mobile object by analysing the quality of the received GNSS signals. The signalling may be performed using an enhanced CAM message, where an information element indicative of the degraded or absent GNSS connectivity is included. Alternatively, the signalling may be performed using an enhanced DENM message, by assigning a new value to the causeCode within the eventType to indicate degraded or absent GNSS connectivity.

At step S220, association information used to identify an element of a perception message that corresponds to the mobile object is obtained by the mobile object. The association information refers to any form of data that can be recognized as representing the mobile object by both the ITS station generating the perception message and the mobile object itself or any entity within the mobile object, such as an equipped ITS station, embedded sensing module, or driving module. Since perception messages are generally structured into containers, each corresponding to a perceived object or group of objects, and include data frames and data fields describing these objects' attributes, the element of the perception message that corresponds to the mobile object may be either a specific data frame within the perception message that individually describes the mobile object or a data frame that globally describes the mobile object along with other perceived objects. Moreover, the association information may be directly included, for instance, as a data field, within the element of the perception message corresponding to the mobile object, such as part of a specific data frame describing the mobile object either individually or globally along with other perceived objects. Alternatively, the association information may be placed elsewhere in the perception message, in a separate element distinct from that describing the mobile object, yet explicitly referencing it, or referenced by it. For example, a dedicated data frame in the perception message may be used for this purpose. Additionally, the perception message is generally broadcast by the originating ITS station within its communication range, allowing the mobile object to receive the perception message when located within this range.

In a first aspect of step S220, the association information may be, or may include, an identifier of the ITS station equipping the mobile object, since the latter has different types of identifiers used in various contexts, including: (i) an ITS station identifier (ITS-S ID), a unique identifier assigned to an ITS station for communication purposes, used in CAM or DENM messages, for example, as the Stationld field of the ITS PDU Header; (ii) communication addresses, which include both logical addresses, such as IPv6 addresses used for V2X communication, and hardware-specific addresses, such as MAC addresses, identifying the communication equipment.. One advantage associated with this first aspect of step S220 is that the association information may be directly used by the ITS station generating perception messages, without needing to exchange it with the ITS station equipping the mobile object, since the latter is already aware of such identifiers.

In a second aspect of step S220, the association information may be, or may include, a newly defined identifier to be used in scenarios where GNSS connectivity is degraded or absent. In such cases, the identifier representing the association information may first be generated by the mobile object, before being shared with the ITS station generating the perception messages. The identifier may alternatively be generated by the ITS station generating the perception message, before being shared with the mobile object.

In a third aspect of step S220, the association information may be represented using other types of information, rather than solely identifiers, such as description information relating to the mobile object. This description information may include past trajectory information, including a list of timestamped positions, velocities, and accelerations, or an object description, such as size and color. For instance, in a scenario where the mobile object periodically sends CAM messages containing timestamped positions, the ITS station generating perception messages may use one of these timestamped positions as association information. The feasibility of this approach relies on the fact that the mobile object is, in some circumstances, aware of its precise position at the specified timestamp, and that this position accurately reflects its location at that moment in time. This precise position may be obtained, for example, by using a visual marker along the road, enabling the mobile object to compute its precise position at the corresponding location. Another method consists of using UWB (Ultra-Wideband) tags installed in the infrastructure, allowing the mobile object to compute its precise position within a specified area of the road. Alternatively, the precise position may be determined by using a GNSS signal, optionally enhanced with an RTK correction, provided that the position has been obtained outside the area where GNSS connectivity is degraded or absent.

At step S230, status information relating to the mobile object is acquired based on the association information from a received perception message. The status information includes any data detailing the mobile object's current status, such as its position, speed, heading, and other dynamic attributes. To achieve this, the content of the perception message is first searched to identify one or more elements corresponding to the obtained association information. This may be done by looking for an element containing the association information, referencing it, or referenced by it. The status information relating to the mobile object is then acquired from the identified elements, either directly, without further processing, or indirectly, by processing the content of the identified elements, in whole or in part. For example, in the direct acquisition approach, the mobile object's position is extracted as-is from the identified elements. In contrast, indirect acquisition involves applying a processing step to one or more positions within the identified elements to determine the mobile object's position. For example, the acquired position of the mobile object may then be used for various purposes, such as for fusion with other positions obtained from other positioning approaches (such as IMU, UWB, camera, or GNSS), for supporting driver awareness or enabling automated control decisions, or for sharing within a perception message, such as a CAM message. In the latter case, namely when the position reported in the CAM message is based on a previously received perception message from another station, it is preferable to explicitly indicate within the CAM message that the position information originates from a perception message. This explicit indication allows other ITS stations receiving the CAM message to correctly interpret the origin of the position data, avoid redundant reporting of the same perceived object in new perception messages, and prevent an artificial increase in the confidence level associated with the received position.

In some embodiments, the identified element of the perception message corresponding to the obtained association information is a data frame that individually describes the mobile object. In the example of a CPM message used as a perception message, a data frame, referred to as the Perception Object data frame, which individually describes a perceived object includes the following information: position, speed, heading, dimensions, classification, confidence, and other relevant dynamic attributes. The confidence parameter represents the level of certainty associated with the provided status information, such as position or speed. It may be expressed as a probability value, a variance measure, or another metric indicating the reliability of the data. In a direct acquisition approach, the mobile object's position is extracted as-is from the data frame. In contrast, in an indirect acquisition approach, the mobile object's position is derived by applying a processing step to the provided position, for example, by factoring in the confidence value. If the position is to be used for executing a maneuver in relation to the mobile object, the acquired position may be adjusted to reflect the worst-case scenario for carrying out the maneuver, ensuring safety and robustness in decision-making. Conversely, in some applications, the acquired position may be adjusted to reflect the best possible position to optimize efficiency.

In other embodiments, the identified element of the perception message corresponding to the obtained association information is a data frame that globally describes the mobile object along with other perceived objects. In the example of a CPM message used as a perception message, a container referred to as the Perceived Region Container, containing multiple Perceived Region data frames. A Perceived Region data frame globally describes a perceived region, which includes, in addition to information about the position and shape of the perceived region, information relating to the perceived objects within that region, such as the number of all the perceived objects and the identities of some or all of the perceived objects. Since no additional information other than the position and shape of the region where the mobile object is located is available, the mobile object's position cannot be extracted as-is from the container and can only be extracted indirectly based on the provided information about the region, specifically its position and shape. For example, the position of the mobile object may be determined as the center of the region. In another example, the position of the mobile object may be determined from the possible positions within the region to reflect either the worst-case scenario for carrying out a maneuver or the best possible position to optimize efficiency.

In further embodiments, the identified element of the perception message corresponding to the obtained association information is a dedicated data frame that explicitly provides the position of the mobile object. In the case of an enhanced CPM message used as a perception message, according to the invention, a dedicated container may be incorporated into the CPM message specifically for positioning purposes. This dedicated container is designed to provide perceived objects with their corresponding positions, for instance, through multiple data frames, each associated with a specific perceived object. This enhancement ensures more precise and direct access to object positions, improving the accuracy and efficiency of object tracking and spatial awareness.

In yet further embodiments, the identified element of the perception message corresponding to the obtained association information may remain the same over time. For example, the identified element may persist as a data frame individually describing the mobile object or as a data frame globally describing the mobile object along with other perceived objects. Alternatively, the identified element of the perception message corresponding to the obtained association information may change over time. This change may depend on the level of risk associated with the mobile object or on the available bandwidth for transmitting the perception message. For example, when the level of risk is high or sufficient bandwidth is available for the perception message transmission, the identified element may be a data frame individually describing the mobile object, such as a Perceived Object data frame within a CPM message. On the other hand, when the level of risk is low or only limited bandwidth is available for the perception message transmission, the identified element may be a data frame globally describing the mobile object along with other perceived objects, such as a Perceived Region data frame within a CPM message.

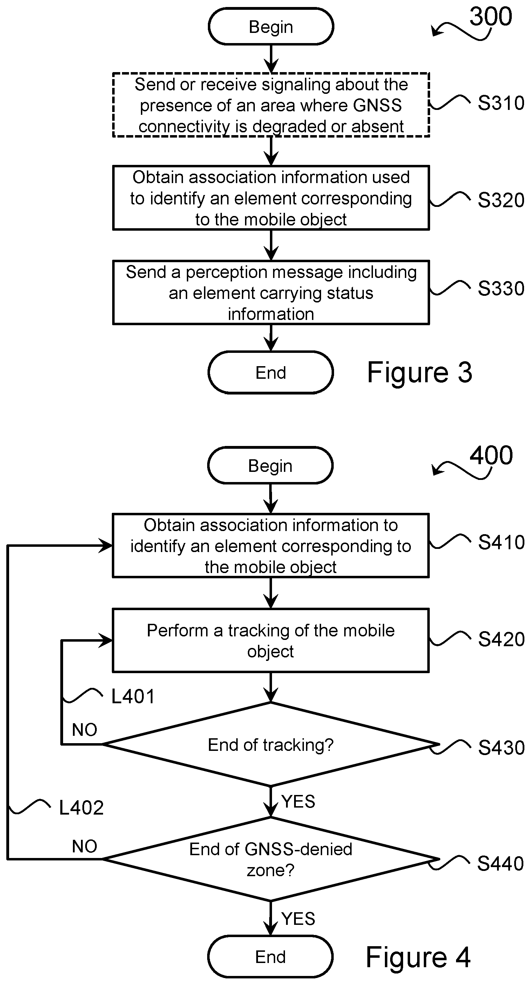

Figure 3 is a flowchart of a method 300 for enabling accurate positioning of mobile objects moving in areas where GNSS connectivity is degraded or absent, according to some embodiments. The method of Figure 3 may be implemented in any processing device with the necessary resources to obtain association information usable to identify elements of a perception message that correspond to a mobile object, and send a perception message incorporating such elements. The processing device may be part of an ITS station installed on a roadside unit or another mobile object. Alternatively, the processing device may be integrated into or embedded within a remote-control center or hosted on a cloud computing platform.

At an optional step S310, the presence of areas where GNSS connectivity is degraded or absent is signalled. The presence of such areas may be signalled by the ITS station generating perception messages to other entities, including mobile objects. For example, if the ITS station generating perception messages is a roadside unit, such as one deployed at the entrance of a tunnel or an urban canyon, such an ITS station may be configured to signal to road users about the presence of such areas systematically, for example, periodically. In another example, if the ITS station generating perception messages is mounted on a mobile vehicle, such an ITS station may be configured to signal to road users about these areas each time it detects degradation of the GNSS signals. The signalling may be performed using an enhanced DENM message or an enhanced IVIM message, where an information element indicative of the degraded or absent GNSS connectivity is included.

At step S320, association information used to identify an element of a perception message that corresponds to the mobile object is obtained by the ITS station generating perception messages. As described with reference to step S220, this information refers to any form of data that can be recognized as representing the mobile object by both the ITS station generating the perception message and the mobile object itself or any entity within the mobile object, such as an equipped ITS station, embedded sensing module, or driving module. The association information may be defined according to any one of the approaches described with reference to the first, second, and third aspects of step S220. The choice of an approach over another in defining the association information may depend on the availability of perception data relating to the mobile object at the ITS station generating perception messages. If such association information is available, then an approach described with reference to the first or third aspects of step S220 may be chosen. If such association information is unavailable, then the approach described with reference to the second aspect of step S220 may be chosen. Without limitation, step S320 may be carried out using an enhanced CAM message sent by an ITS station equipped on the mobile object and received by the ITS station generating perception messages.

At step S330, a perception message, including one or more elements containing, referencing, or referenced by the association information, is sent to convey details about the mobile object's status. In other words, the one or more elements are carrying the details about the mobile object's status. The perception message may be transmitted via unicast, multicast, or broadcast, depending on the intended recipients. In all cases, it is sent within the communication range of the ITS station generating it. Upon reception, the association information is used to identify specific elements within the perception message that correspond to the mobile object. This enables the acquisition of status information, which may include the object's position, speed, heading, and other dynamic attributes. The extraction of status information can be performed directly, by retrieving the data as-is from the identified elements, or indirectly, by processing the content of these elements to refine or infer the status information. For instance, in the direct acquisition approach, the mobile object's position is obtained exactly as specified in the perception message, whereas in the indirect acquisition approach, additional processing may be applied to multiple positions within the identified elements to determine the mobile object's position. Without limitation, step S330 may be carried out using an enhanced CPM message sent by the ITS station generating perception messages and received by an ITS station equipped on the mobile object.

Figure 4 is a flowchart of a method 400 for enabling accurate positioning of mobile objects moving in areas where GNSS connectivity is degraded or absent, according to other embodiments. The method of Figure 4 may be implemented in any processing device with the necessary resources to obtain association information usable to identify elements of a perception message that correspond to a mobile object, and send a perception message incorporating such elements. The processing device may be part of an ITS station installed on a roadside unit or another mobile object. Alternatively, the processing device may be integrated into or embedded within a remote-control center or hosted on a cloud computing platform.

At step S410, association information used to identify an element of a perception message that corresponds to the mobile object is obtained by the ITS station generating perception messages. As described with reference to S320, this information refers to any form of data that can be recognized as representing the mobile object by both the ITS station generating the perception message and the mobile object itself, and may defined according to any one of the approaches described with reference to the first, second, or third aspects of step S220. This association process, defined as providing as output the association information, may be carried out while the mobile object is approaching an area where GNSS connectivity is degraded or absent, and may be initiated either by the ITS station generating perception messages or the mobile object. Preferably, the association process is carried out when the mobile object is at a position, outside the area where GNSS connectivity is degraded or absent, where both the ITS station generating perception messages and the mobile object are able of determining or unambiguously determining that the position corresponds to the mobile object and not to another mobile object. This constraint is beneficial as it avoids that the ITS station generating perception messages mistakes the mobile object with the association is established with any other mobile object, which is very likely to occur in a traffic jump scenario. This constraint is also beneficial since it allows the use of a timestamped position as association information, as described with reference to the third aspect of step S220.

In some embodiments, the association information may be defined according to a validity time period, which specifies the duration during which the association information is considered valid. In other words, only during this validity time period is the ITS station generating the perception message allowed to use the association information to represent the mobile object, or the mobile object is permitted to rely on the association information to retrieve its status information from a perception message.

In other embodiments, the association information may be defined according to a validity area, which specifies the geographical region of the mobile object within which the association information is considered valid. In other words, only within this validity area is the ITS station generating the perception message allowed to use the association information to represent the mobile object, or the mobile object is permitted to rely on the association information to retrieve its status information from a perception message.

In further embodiments, the association information may be defined by a combination of both a validity time period and a validity area, such that the association information is considered valid only if both temporal and spatial constraints are satisfied. This combined approach enhances the contextual relevance and accuracy of the association between the mobile object and its representation in perception data.

At step S420, which, together with step S430, forms the inner loop L401, tracking of the mobile object is performed. The tracking process involves determining details about the mobile object's status, which may include the object's position, speed, heading, and other dynamic attributes. This may be achieved by the ITS station generating perception messages using its equipped sensors. The tracking process also involves sending a perception message that includes one or more elements that contain or reference the association information to convey the determined details about the mobile object's status. In other words, the one or more elements are carrying the details about the mobile object's status. Preferably, the association information is used only when the validity constraints, e.g., a validity time period, a validity area, or both, are satisfied. In other words, if the association information is no longer valid, the mobile object may be reported in the perception message without including the association information.

At step S430, it is checked whether the tracking of the mobile object is still ongoing. A first example of a condition that ends the tracking is the disappearance of the mobile object from the field of view of the sensors equipped on the ITS station generating the perception messages. A second example of a condition that ends the tracking is the reception of an explicit request from the mobile object to temporary stop the tracking. If the association information is defined using validity constraints, e.g., a validity time period, a validity area, or both, then, in step S430, it is also checked whether these validity constraints are satisfied, where the invalidity of any constraint results in the termination of the tracking. If the tracking of the mobile object is determined to be still ongoing, a new iteration of loop L401 is executed for the next time instant. If the tracking of the mobile object is determined to have ended, the inner loop L401 is exited, and step S440 is performed.

At step S440, which, together with steps S410, S420, and S430, forms the outer loop L402, it is checked whether the mobile object is still located within an area where GNSS connectivity is degraded or absent. If that area is a tunnel or an urban canyon, the check carried out in step S440 may consist of verifying whether the mobile object is still in the tunnel or the urban canyon. The check may also be considered negative upon reception of an explicit request from the mobile object to permanently stop the tracking. If it is determined that the mobile object is still located within an area where GNSS connectivity is degraded or absent, a new iteration of loop L402 is executed, starting with obtaining new association information. Otherwise, the outer loop L402 is exited, and the method ends.

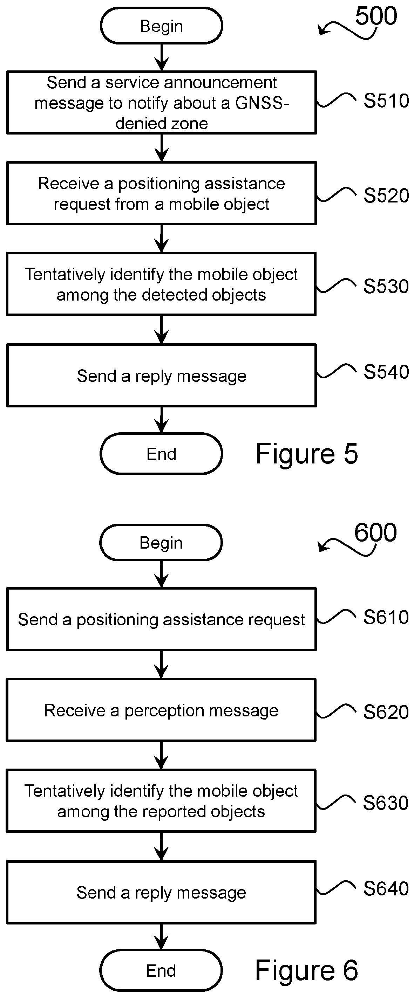

Figure 5 is a flowchart of a method 500 for obtaining association information for use in enabling accurate positioning of mobile objects moving in areas where GNSS connectivity is degraded or absent, according to some embodiments. The method of Figure 5 may be used to implement steps S310 and S320, or S410, by allowing the mobile object and the ITS station generating perception messages to obtain association information that is used to identify an element of a perception message that corresponds to the mobile object. The method is initiated by, and implemented at, the ITS station generating perception messages. Without limitation, the ITS station generating perception messages is assumed to be equipped on a roadside unit and located close to or inside the areas where GNSS connectivity is degraded or absent, such as the roadside unit R101 described with reference to the first communication scenario in Figure 1.

At step S510, a service announcement message is sent, for example, periodically via broadcast, by the ITS station generating perception messages to notify road users within its communication range about the presence of an area where GNSS connectivity is degraded or absent. For example, the service announcement message may include information elements for notification purposes, information elements describing the area with degraded or absent GNSS connectivity, and information elements to support connection establishment with the ITS station generating perception messages. The information elements used for notification purposes may indicate that there is an area with degraded or absent GNSS connectivity, and may also indicate the presence of a localization service provided by the road infrastructure that enables road users to receive their positions. They may further describe the type of association information to be used in order to enable such as service, for example, according to any one of the approaches described with reference to the first, second, and third aspects of step S220. The area where GNSS connectivity is degraded or absent may be described using references to GNSS coordinates, map lane identifiers, or physical anchors for positioning (e.g., visual features, UWB anchor positions), or a combination thereof. The information elements used to support connection establishment may include an IP address, a port number, or a protocol type that the mobile object should use in order to send a positioning assistance request. The information element may specify a frequency band to be used to send the positioning assistance request, and may also describe the method to be used by the mobile object to connect to the localization assistance service, which may, for example, rely on an enhanced CAM message or an enhanced MCM Request message. The service announcement message may be an enhanced IVIM message, an enhanced DENM message, an enhanced MCM Offer message, a Service Announcement Extended Message as defined in ETSI TS 102 890-1 (2017-05), or a combination thereof. Without limitation, step S510 may be used to implement step S310 described with reference to Figure 3.

At step S520, a positioning assistance request message is received by the ITS station generating perception messages from the mobile object, requesting positioning assistance while moving through the area where GNSS connectivity is degraded or absent. The positioning assistance request message includes information that allows the ITS station generating perception messages to unequivocally and reliably identify the mobile object. For example, the positioning assistance request message may include information elements for positioning assistance purposes, as well as information elements describing the mobile object. The mobile object may be described using one or more of its identifiers, as explained with reference to the first aspect of step S220, past trajectory information (including a list of timestamped positions, velocities, and/or accelerations), and a vehicle description (such as size and/or colour). The positioning assistance request message may be an enhanced CAM message, an enhanced MCM Request message, or a new direct point-to-point IP ITS message. The positioning assistance request message may also be composed of several messages, for example, an enhanced CAM message and a CPM message sent by the mobile object itself, describing its surrounding environment, such as the detected surrounding objects which can be used by a receiving ITS station, such as the ITS station generating perception messages, to accurately identify the mobile object.

At step S530, the mobile object requesting positioning assistance is tentatively identified among the detected objects perceived by the ITS station generating perception messages using its sensors. This identification relies primarily on the information included in the positioning assistance request message, which is compared to the information of the detected objects, such as a unique identifier of the mobile object, one of its past timestamped positions, its past trajectory, a combination of its physical attributes, such as size and colour, or its surrounding environment, such as the detected surrounding objects. If the identification is successfully achieved, the mobile object is added to a list of tracked objects, and association information is obtained by the ITS station generating perception messages to enable identification of one or more elements corresponding to the mobile object within perception messages.

At step S540, a reply message is sent to the mobile object requesting positioning assistance. The content of the reply message depends on whether the identification process carried out in step S530 is successful or not. If the identification process has been successfully carried out, the reply message includes information indicative of the successful result, in addition to the association information to be used to enable identification of one or more elements corresponding to the mobile object within a perception message. In other words, the reply message indicates the establishment of the association between the two ITS stations. If the identification process has failed, the reply message includes information indicative of the failure result. The reply message may be an enhanced CPM message or a MCM Reservation message.

Figure 6 is a flowchart of a method 600 for obtaining association information for use in enabling accurate positioning of mobile objects moving in areas where GNSS connectivity is degraded or absent, according to other embodiments. The method of Figure 6 may be used to implement step S220, by allowing the mobile object and the ITS station generating perception messages to obtain association information that is used to identify an element of a perception message that corresponds to the mobile object. The method is initiated by, and implemented at, the mobile object, such as vehicle V101 or V202, described with reference to the first and second communication scenarios in Figure 1, respectively.

At step S610, a positioning assistance request message is sent, for example via broadcast, by the mobile object to request positioning assistance while moving through an area where GNSS connectivity is degraded or absent. The mobile object may proactively request positioning assistance before entering such an area, for example a tunnel, whose location may be known from mapping sources or detected using long-range sensors. Alternatively, the mobile object may request positioning assistance in response to a degradation of the GNSS connectivity or in response to the reception of a notification of a GNSS-denied zone with, without limitation, an enhanced IVIM message or an enhanced DENM message. As described with reference to step S520, the positioning assistance request message may include information elements for positioning assistance purposes, as well as information elements describing the mobile object, such as one or more of its identifiers, past trajectory information, and a description of the mobile object. The sent positioning assistance request message may, for example, be a MCM Intent message.

At step S620, a perception message, reporting detected objects perceived by the ITS station generating perception messages using its sensors, is received by the mobile object from an ITS station generating perception messages. This message may include information that allows the mobile object to unequivocally and reliably identify itself within the received perception message. Among the included information, there may be one or more of its identifiers, past trajectory information, and a description of the mobile object. The received perception message may also include information that allows the mobile object to infer association information that is to be used to enable identification of one or more elements corresponding to the mobile object within perception messages sent by the ITS station. The received perception message may, for example, be a MCM Request message or an enhanced CPM message.

At step S630, the mobile object requesting positioning assistance tentatively identifies itself among the detected objects reported within the received perception message. This identification relies primarily on the information included in the received perception message, compared to the mobile object's own information, such as a unique identifier, one of its past timestamped positions, or a combination of its physical attributes, such as size and color. If the identification is successfully achieved, the mobile object infers association information to enable the identification of one or more elements corresponding to the mobile object within perception messages.

At step S640, a reply message is sent to the ITS station generating perception messages. The content of the reply message depends on whether the identification process carried out in step S630 is successful or not. If the identification process has been successfully carried out, the reply message includes information indicative of the successful result, in addition to the association information to be used to enable identification of one or more elements corresponding to the mobile object within a perception message. In other words, the reply message indicates the establishment of the association between the two ITS stations. Upon reception of the reply message indicating a successful identification, the ITS station generating perception messages may add the mobile object to a list of tracked objects. If the identification process has failed, the reply message includes information indicative of the failure result. The reply message may, for example, be a MCM Reservation message.

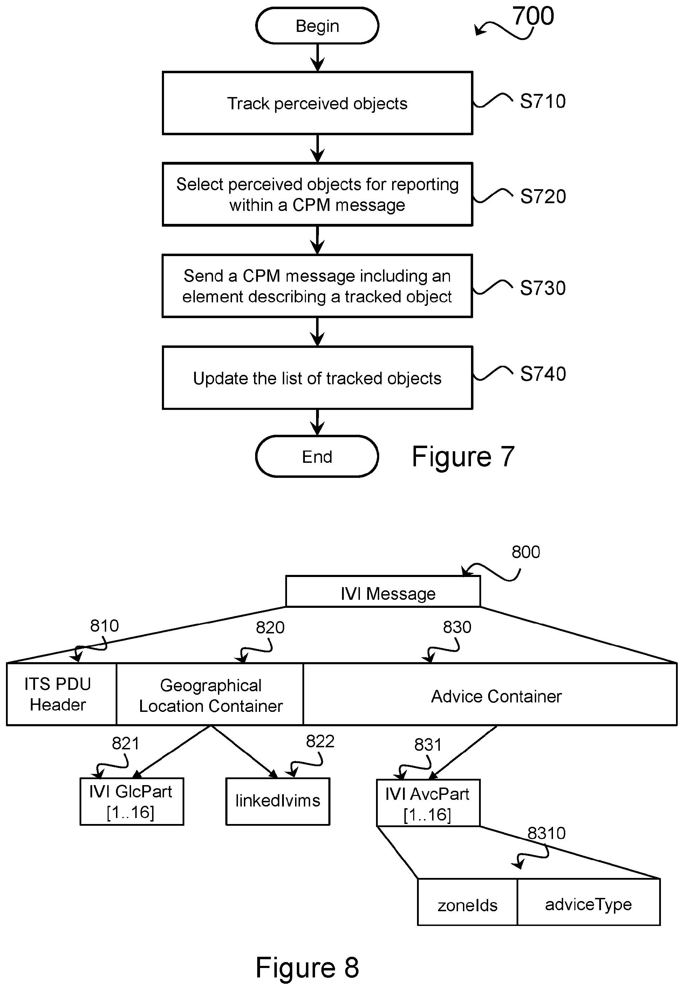

Figure 7 is a flowchart of a method 700 for enabling accurate positioning of mobile objects moving in areas where GNSS connectivity is degraded or absent, according to further embodiments. The method of Figure 7 may be implemented in any ITS station with the necessary resources to perceive the surrounding environment, obtain association information that is used to identify elements of a CPM perception message that correspond to a mobile object, and send a perception message incorporating such elements. Without limitation, the ITS station is assumed to be equipped on a roadside unit and located close to or inside the areas where GNSS connectivity is degraded or absent, such as the roadside unit R101 described with reference to the first communication scenario in Figure 1. The method of Figure 7 may be used to implement step S420 described with reference to Figure 4.

At step S710, objects evolving in the surrounding environment are perceived by the ITS station. Among these perceived objects are those for which association information is obtained by the ITS station generating CPM perception messages, referred to as tracked objects. This tracking process may involve continuing to track previously perceived objects and potentially predicting their future behavior, for example, by using dynamic information provided by those objects through ITS messages, such as VAM and CAM messages.

At step S720, Among the objects perceived by the ITS station, multiple objects are selected to be reported in the next CPM perception message to be sent. The selection may follow basic rules, where moving objects are prioritized over static objects, objects with a high safety risk over those with a low safety risk, and newly perceived objects over already reported objects. Preferably, the selection also follows enhanced rules, according to the invention, where tracked objects are prioritized over non-tracked objects (i.e., objects that are perceived but not tracked over time). The list of tracked objects may have previously been created, for example as described in step S530 or S640. More generally, tracked objects are reported in consecutive CPM perception messages with a higher reporting frequency than non-tracked objects. Additional enhanced rules may stipulate that tracked objects which are no longer perceived, labeled, for example, as temporarily-lost-tracked objects, and tracked objects for which the tracking has stopped, labeled, for example, as definitively-removed-tracked objects, may still be reported in the CPM messages, using, for example, their last known position or a predicted position obtained based on past trajectory information, preferably along with a low confidence level and a field indicating the status, for example, temporarily lost, temporarily hidden, or definitively removed In other embodiments, the status of the objects which are no longer detected can be reported using an MCM message with a type MCMExecutionStatus for a temporarily lost object, or MCMCancel or MCMTermination.

At step S730, a CPM perception message is sent by the ITS station, for example, via broadcast within its communication range. If a tracked object is reported within the sent CPM perception message, the latter includes an element, such as a data frame individually describing the tracked object or globally describing the tracked object along with other perceived objects, containing, referencing, or referenced by the association information obtained for that specific tracked object. The sending of the CPM message may follow basic rules that encompass event-driven mechanisms, meaning a CPM message is sent when something relevant is detected, and periodic fallback mechanisms, where CPM messages are sent at regular intervals if no event triggers occur, to maintain situational awareness. Preferably, the sending also follows enhanced rules, according to the invention, where a newly perceived tracked object is considered as an event triggering the generation of a CPM message, and the frequency of CPM message generation is increased when tracked objects are present.

At step S740, the list of tracked objects is updated by the ITS station generating CPM perception messages. The updating may include adding to the list perceived objects for which association information is obtained by the ITS station, for example as described with reference to steps S530 or S640. It may also include removing objects from the list, such as those that have not been perceived and tracked in step S710 for a time period exceeding a defined threshold, objects that have left the area where GNSS connectivity is degraded or absent, or objects whose association with the ITS station generating perception messages has ended.

In some embodiments where the area associated with degraded or absent GNSS connectivity is covered by multiple adjacent roadside units equipped with respective ITS stations generating perception messages, tracking information relating to a mobile object tracked by an ITS station perceiving a first part of the area is sent to an adjacent ITS station perceiving a second part of the area. Generally, the tracking information includes information elements describing the mobile object to allow its identification by the adjacent ITS station. Preferably, the tracking information includes the association information used by the mobile object to identify an element corresponding to itself within a perception message. The tracking information transmitted by the first ITS station to the adjacent ITS station may generally be similar to the information transmitted by the ITS station equipping the mobile object within the positioning assistance request message, for example as described in step S520. It should include information that allows the ITS station generating perception messages to unequivocally and reliably identify the mobile object. For example, it may include information elements for positioning assistance purposes, as well as information elements describing the mobile object. The mobile object may be described using one or more of its identifiers, as explained with reference to the first aspect of step S220, past trajectory information (including a list of timestamped positions, velocities, and/or accelerations), and a vehicle description (such as size and/or colour). In this case, the multi-step process of obtaining the association information, for instance as described with reference to Figures 5 and 6, is avoided by both the mobile object and the adjacent ITS station perceiving the second part of the area. Of course, this approach may be adapted to a scenario where tracking information is broadcast to all the ITS stations that perceive the area where GNSS connectivity is degraded or absent. This guarantees that the mobile object, while travelling through the area, is continuously provided with its status information, including its accurate position, despite the degradation or absence of GNSS connectivity. In other embodiments, the association between the mobile object and the ITS station generating perception messages, as represented by the association information used to identify an element corresponding to the mobile object within a perception message, may be ended by either of the two involved entities, i.e., the mobile object or the ITS station generating perception messages. For example, the mobile object may decide to end the association upon determining that it no longer needs status information from the ITS station generating perception messages, for one or more of the following reasons: the mobile object is no longer in an area where GNSS connectivity is degraded or absent; a driving mode on the mobile object is switched from automated to manual; tracking performed by the ITS station generating perception messages is lost or degraded, for example, no perception message including an element containing status information relating to the mobile object is received for a defined time threshold; or an ITS station providing higher-accuracy perception data is found by the mobile object. In these embodiments, the entity that ends the association may send a notification message to the other entity, indicating that the association has been terminated. A MCM message may be used as notification message with a type MCMCancel for abnormal termination, or with a type MCMTermination for a normal termination, such as if the vehicle has exited the GNSS-denied zone. Optionally, the notification message may include a reason explaining why the association was ended, such as a change in driving mode, improved GNSS connectivity, or the availability of a more accurate ITS station.

Figure 8 illustrates the structure of an enhanced IVIM message 800, according to embodiments of the invention. The enhanced IVIM message retains the structure of a standard basic IVIM message, such as the one specified in ETSI TS 103 301 (V2.2.2, 2024), while incorporating one or more additional data elements. These additional data elements may be integrated either within the same Container or in distinct Containers within the IVIM message.

The basic IVIM message, as specified in ETSI TS 103 301 (V2.2.2, 2024), includes, in addition to the ITS PDU Header 810, several structured containers, among which the IVIM Advice Container 830 and the Geographical Location Container (GLC) 820 are key components. The IVIM Advice Container is responsible for delivering advisory or regulatory information from infrastructure elements to vehicles, with content ranging from speed recommendations and lane restrictions to hazard warnings and temporary traffic regulations. This advisory or regulatory information may be described in data frames of type GicPart for general and static advices or information about the infrastructure object (not represented in Figure 8), and in data frames of type AvcPart 831 for dynamic and changing advices or information, intended, for example, for automated vehicles. Each piece of advice 8310 within this container is defined by an adviceType, identifying the nature of the guidance (e.g., speed advice or warning), and it may contain an adviceValue, specifying the associated value, such as a speed limit or message code. The container may also include a list of applicable vehicle categories, allowing advice to be targeted at specific vehicle types such as heavy trucks or motorcycles. Validity conditions can further refine when and how the advice should be applied, using parameters such as time of day, weather conditions, or vehicle state. An optional urgency or priority indicator may also be present to help receiving systems prioritize messages based on criticality. Importantly, each advice item is linked to a specific location referenced by an identifier zoneld, defined using the Geographical Location Container (GLC), ensuring spatial relevance.

The GLC 820 provides the geographic context in which the advice is valid. It defines regions identified by unique identifiers zoneld. It supports multiple referencing methods, including point-based references like GPS coordinates, linear referencing for road segments, or encoding schemes such as OpenLR to ensure interoperability across systems. The GLC also includes directional applicability, specifying whether the advice applies to traffic in one direction or both, and may further detail lane-specific guidance when applicable. The type of location, such as an intersection, road stretch, or area, is also indicated, supporting accurate geographic scoping. This structured spatial referencing enables precise localization of infrastructure guidance and supports reliable interpretation by connected vehicles. Together, the Advice Container and the GLC allow IVIM messages to deliver comprehensive, context-aware, and location-specific information to vehicles, enhancing safety and decision-making, especially in areas with limited GNSS availability or changing road conditions. Of course, the basic IVIM message also includes other data elements, such as those referenced as 821 and 822 in Figure 8.

According to embodiments of the invention, the enhanced IVIM message includes announcement information relating to an area where GNSS connectivity is degraded or absent. Such an area may be geographically specified within the Geographical Location Container (GLC), allowing vehicles to spatially localize the affected zone. In addition, advisory or regulatory information from infrastructure elements to vehicles may be transmitted in association with that area. This includes, for example, warnings about the presence of a GNSS-denied zone, advice to adapt the driving mode, such as switching from automated to manual operation, and identification information enabling the vehicle to recognize ITS stations that generate perception messages capable of providing accurate positioning data. These elements are conveyed through the IVIM Advice Container, which defines the type of advice, its applicable conditions, and the intended recipients based on vehicle category or environmental context. For example, the list of rules defined in an enumeration AutomatedVehicleRule, used in the AvcPart, may include a new value indicating the authorized SAE level when the vehicle is supported by a localization service and another value indicating the authorized SAE level when no localization service is supporting the vehicle.

By coupling this advice with precise geographic referencing via the GLC, the enhanced IVIM message, typically sent by a road infrastructure, for example as described with reference to the methods of figures 3 and 5, ensures that vehicles are both warned about and assisted through areas where GNSS signals are unreliable or unavailable, thereby maintaining safe and efficient navigation. For example, an enhanced IVIM message according to the invention may be used to carry out step S310 or S510.

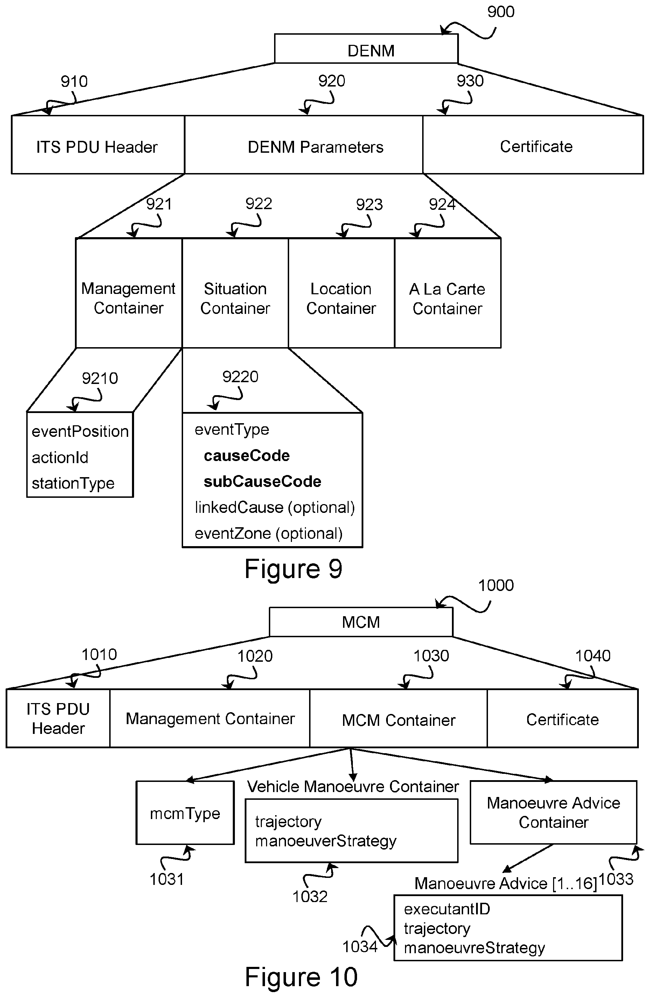

Figure 9 illustrates the structure of an enhanced DENM message 900, according to embodiments of the invention. The enhanced DENM message retains the structure of a standard basic DENM message, such as the one specified in ETSI TS 103 831 (V2.2.1, 2024), while incorporating one or more additional data elements. These additional data elements may be integrated either within the same Container or in distinct Containers within the DENM message.

The basic DENM message, as specified in ETSI TS 103 831 (V2.2.1, 2024), includes several structured containers that organize the information for efficient transmission and interpretation. These containers are designed to provide both administrative and environmental data relevant to the vehicle and infrastructure communication system. Among these containers, there are the ITS PDU Header 910, DENM Parameters 920, and Certificate 930. The DENM Parameters Container includes the Management Container 921, the Situation Container 922, the Location Container 923, and A La Carte Container 924. The Situation Container is crucial for describing the specific environmental hazard or traffic situation being communicated. One of the key data elements within this container is the eventType data element, which indicates the type of event or hazard that triggered the DENM message. Common event types include accidents, roadworks, weather conditions, and other abnormal traffic situations. The eventType helps to classify the hazard and determine the appropriate response or actions for vehicles in the affected area. The geographic context for the event described in the Situation Container is provided by a combination of the data element EventPosition, 9210, in the Management Container, the data element eventZone, 9220, in the Situation Container and additional data elements in the Location Container. The geographical context includes information such as the location (typically in geographic coordinates), and the extent of the affected area, which may be described by coordinates, a radius, or specific road segments. These data elements help vehicles precisely locate the hazard, enabling them to adjust their route or behavior accordingly.

According to embodiments of the invention, the enhanced DENM message includes announcement information relating to an area where GNSS connectivity is degraded or absent. Such an area may be signaled in the Situation Container as an environmental hazard situation, and geographically specified within the Situation Container. For example, an eventType indicating the presence of an area where GNSS connectivity is degraded or absent may be defined, for example with an associated CauseCode assigned with a value indicating GNNS-denied zone. Since DENM messages are event-driven, an enhanced DENM message may be triggered by a roadside unit when a mobile object approaches the area or is detected within it. The enhanced DENM message may also be triggered periodically. An enhanced DENM message may also be triggered by the mobile object itself when it detects degradation or absence of GNSS connectivity, as described with reference to step S210. This approach ensures that vehicles are alerted to areas where GNSS signals may not be reliable, thereby allowing them to adjust their navigation strategies accordingly. By integrating this information into the Situation Container, the message can provide both the hazard type and the specific location, which enhances situational awareness and improves road safety in environments with degraded GNSS connectivity. For example, an enhanced DENM message according to the invention may be used to carry out steps S210, S310 and S510.

Figure 10 illustrates the structure of an enhanced MCM message 1000, according to embodiments of the invention. The enhanced MCM message retains the structure of a standard basic MCM message, such as the one specified in ETSI TS 103 561 (V0.0.10, 2025), while incorporating one or more additional data elements. These additional data elements may be integrated either within the same Container or in distinct Containers within the MCM message.

The basic MCM message 1000, as specified in ETSI TS 103 561 (V0.0.10, 2025), comprises several structured containers, including the ITS PDU Header 1010, the Management Container 1020, the MCM Container 1030, and the Certificate 1040, with the MCM Container playing a central role in conveying manoeuvre-related information. This container can serve as a Vehicle Manoeuvre Container 1032, representing the vehicle's intent in the form of a set of possible trajectories, allowing other vehicles or infrastructure systems to anticipate its future movement. Alternatively, it can function as a Manoeuvre Advice Container 1033, used by a roadside unit or another vehicle to provide manoeuvre recommendations or instructions, such as yielding, merging, or lane change suggestions, to improve coordination and traffic flow. This dual capability supports both cooperative and autonomous driving scenarios, enhancing safety and efficiency in complex or dynamic road environments. Within these containers, a manoeuvre strategy element is included to specify the type, context, and execution parameters of the planned or advised manoeuvre. This element enables precise interpretation of the manoeuvre logic, supporting coordinated decision-making in cooperative and automated driving environments, and enhancing both safety and efficiency in complex traffic scenarios. More broadly, the MCM message can also be used in complex exchanges of messages between two ITS stations. The field mcmType 1031 can be used to indicate the type of the message, among the following list:
- MCMOffer: to propose a manoeuvre or a strategy.
- MCMIntent: sent by a vehicle to indicate its intention.
- MCMRequest: to request a manoeuvre.
- MCMReservation: to start a manoeuvre.
- MCMExecutionStatus: to indicate the status of an ongoing manoeuvre.
- MCMCancel: to stop a manoeuvre in abnormal case or way.
- MCMTermination: to end the manoeuvre in normal case.

According to some embodiments of the invention, the manoeuvre strategy data element 1034, or a newly defined data element within the enhanced MCM, may include instructions relating to the presence of an area where GNSS connectivity is degraded or absent, including, for example, the associated manoeuvre to use an assisted positioning service. Examples of such instructions include a request to change the localization technique from or to a GNSS-based localization method, or a recommendation to maintain or change the automated driving mode in response to GNSS availability conditions. This enables the vehicle receiving the instruction to dynamically adapt its behaviour based on situational awareness provided by infrastructure or other vehicles, thereby enhancing robustness and safety in environments with intermittent or no GNSS coverage.

According to other embodiments of the invention, enhanced MCM messages are used to carry out, either in part or in total, the association between a mobile object and an ITS station generating perception in the presence of an area where GNSS connectivity is degraded or absent. In the association process described with reference to Figure 5, which is initiated by the ITS station generating perception messages, enhanced MCM messages may be used as service announcement messages (step S510) with a MCMOffer sent by the positioning service provider, as positioning assistance request messages (step S520) with a MCMRequest sent by the vehicle, and as reply messages (step S540) with a MCMReservation sent in case of successful identification and association, or a MCMCancel sent in case of failed identification and association. In the association process described with reference to Figure 6, which is initiated by the mobile object, enhanced MCM messages may be used as positioning assistance request messages (step S610) with a MCMIntent sent by the vehicle, as perception messages (step S620) with a MCMRequest sent by the positioning service provider, as reply messages (step S640) with a MCMReservation sent in case of successful identification and association, or a MCMCancel sent in case of failed identification and association.

According to further embodiments of the invention, during the execution of a service for accurate positioning of mobile objects, for example as described with reference to Figure 7, an enhanced MCM message can be used to report on the correct execution of the service with a MCMExecutionStatus assigned a value 'inProgress', to report on a temporary suspension of the service with a MCMExecutionStatus assigned the new value 'temporarySuspended', or to report on the end of the service either in normal way with a MCMTermination, such as when the vehicle leaves the positioning service zone, or in an abnormal way with a MCMCancel, such as in the case of a cancellation of the service .

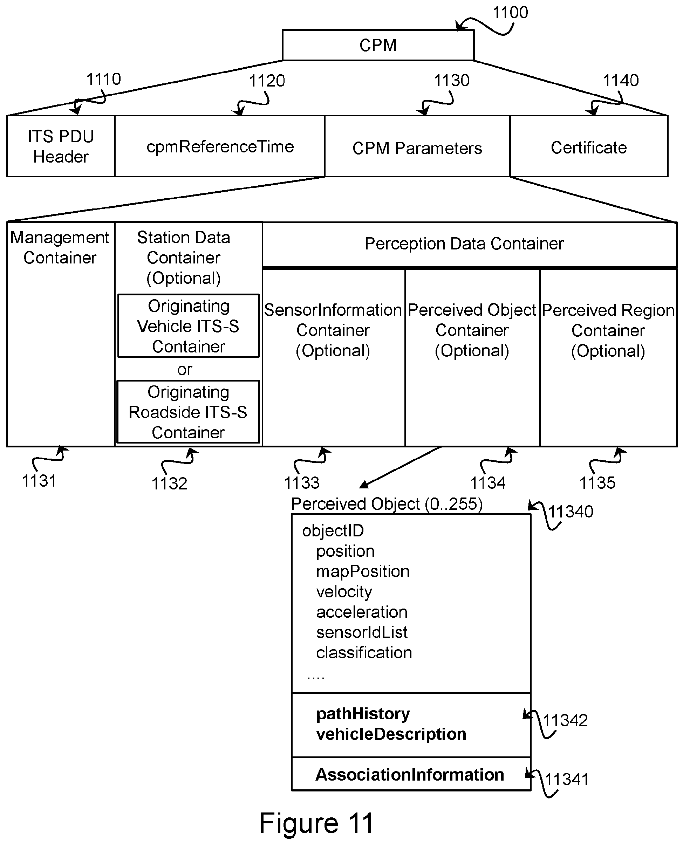

Figure 11 illustrates the structure of an enhanced CPM message 1100, according to embodiments of the invention. The enhanced CPM message retains the structure of a standard basic CPM message, such as the one specified in ETSI TS 103 324 (v2.1.1, 2023), while incorporating one or more additional data elements. These additional data elements may be integrated either within the same Container or in distinct Containers within the CPM message.

The basic CPM message, as specified in ETSI TS 103 324 (v2.1.1, 2023), comprises several structured containers, including the Perceived Object Container 1134 and the Perceived Region Container 1135 within the CPM Parameters container 1130. The Perceived Object Container contains a list of Perceived Object data frames 11340 providing detailed information about objects detected in the CPM-originating ITS station's environment, such as their type, position, velocity, acceleration, and confidence levels. The Perceived Region Container, on the other hand, contains one or multiple Perceived Region data frames. A Perceived Region data frame globally describes a perceived region, which includes, in addition to information about the position and shape of the perceived region, information relating to the perceived objects within that region, such as the number of all the perceived objects and the identities of some or all of the perceived objects. Of course, the basic CPM message also includes other data elements, such as those referenced as 1110, 1120, 1140, 1131, 1132, and 1133 in Figure 11.

According to some embodiments of the invention, the Perceived Object data frame, when describing a perceived or tracked object, further contains association information 11341 that is used to identify the Perceived Object data frame as corresponding to that perceived object, for example by the perceived object itself upon receiving the CPM message. The association information may be defined according to any one of the first, second, and third aspects of step S220. For example, an enhanced CPM message according to these embodiments of the invention may be used as a perception message to carry out steps S230, S330, and S420.

According to other embodiments of the invention, the Perceived Object data frame, when describing a perceived or tracked object, in addition to the association information for example, further contains additional description information 11342 relating to the perceived object to allow the perceived object to identify itself as the reported perceived object. Among this additional description information, there may be past trajectory information (including a list of timestamped positions, velocities, and/or accelerations), and an object description (such as size and/or color). For example, an enhanced CPM message according to these embodiments of the invention may be used to carry out the association processes described with reference to Figure 2 (step S220) and Figure 6 (step S620).

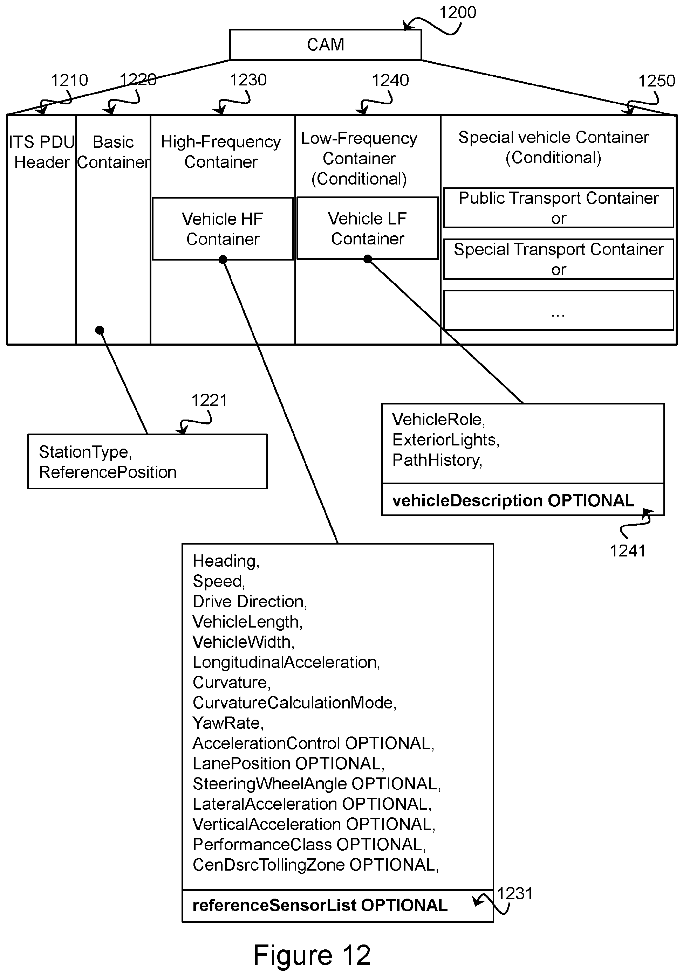

Figure 12 illustrates the structure of an enhanced CAM message 1200, according to embodiments of the invention. The enhanced CAM message retains the structure of a standard basic CAM message, such as the one specified in ETSI TS 103 900 (V2.1.1, 2023), while incorporating one or more additional data elements. These additional data elements may be integrated either within the same Container or in distinct Containers within the CAM message.

The basic CAM message, as specified in ETSI TS 103 900 (V2.1.1, 2023), comprises several structured containers, including the ITS PDU Header 1210, the Basic container 1220, the Vehicle High-Frequency Container 1230 and the Vehicle Low-Frequency Container 1240, with the two last providing essential dynamic and static information about the originating vehicle.

The ITS PDU Header 1210, common to all ITS messages, contains the ITS identifier of the emitting station (stationld) and a timestamp allowing computation of the time of capture of positioning information in the message. The basic container 1220 of the CAM message contains the position 1221 (referencePosition) of the emitting station at the time indicated in the ITS PDU header. These various types of information, identifiers and positions, may be used, for example, as association information as described with reference to the first and third aspects of step S220.

The Vehicle High-Frequency Container 1230 typically includes rapidly changing status data such as speed, heading, acceleration, and yaw rate, enabling timely awareness of the vehicle's immediate behaviour. In contrast, the Vehicle Low-Frequency Container 1240 provides more stable information, such as the vehicle's dimensions, role (e.g., emergency, public transport), and path history. Together, these containers enable cooperative awareness between road users, enhancing traffic efficiency and safety by facilitating informed decision-making in real-time. Of course, the basic CAM message also includes other data elements, such as that referenced as 1250 in Figure 12.

According to some embodiments, the Vehicle High-Frequency Container 1230 further includes or references sensor information 1231 indicative of the type of sensor or sensors used to compute status data, such as the position. For example, the sensor information may indicate that the status data was computed entirely or partially based on perception messages, such as CPM messages, for example as described with reference to step S230 in Figure 2. This allows receiving entities to assess the reliability and origin of the shared data, enabling more informed decisions and improving trust in cooperative systems. The optional referenceSensorList data element 1231 of the enhanced CAM message may contain a list of sensors used by the vehicle sending the CAM message to compute its position. The list of sensors may include one or more of GNSS, IMU, UWB, odometry, and received ITS perception messages (such as CPM messages). If the vehicle is using a fusion algorithm to compute its position, the sensors whose inputs are involved may be indicated in the enhanced CAM message. If the CPM message or any message of cooperative awareness received by the radio of the CAM-originating ITS station is indicated in the list of sensors used to compute the position indicated in the CAM message, a receiving station of the CAM message should preferably not use this position in a generated CPM message, as this could create a loop between the two stations sending respectively CAM and CPM messages, leading to incorrect positions. Similarly, if the CPM message indicates that the Perceived Object position was computed using the CAM message as a sensor in the filed sensorlDList of the Perceived Object in reference to Figure 11, the vehicle receiving this CPM message should not use this position to compute its own position and should not use it to generate a CAM message.

According to other embodiments, the Vehicle Low-Frequency Container 1240 further includes additional description information 1241 relating to the originating vehicle to allow an ITS station generating perception messages to identify the originating vehicle among the perceived objects. Among this additional description information, there may be an object description (such as shape and/or color). This enhanced CAM message can be used for example in steps S320 (Figure 3) or S520 (Figure 5).

According to further embodiments, an additional container may be added to the enhanced CAM message to explicitly requesting a positioning assistance request. This container could then include for example additional description of the vehicle and association information.

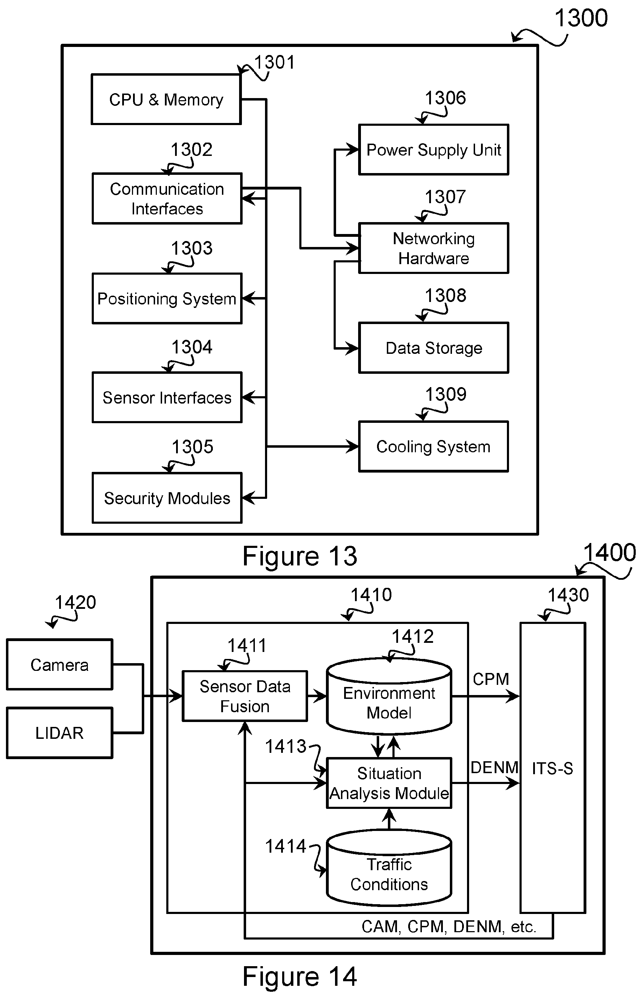

Figure 13 illustrates the hardware structure of an ITS station 1300, in which the invention may be implemented. The hardware components are integrated to ensure that the ITS station can handle communication, data processing, security, and management tasks effectively. At the core of the ITS station is the Central Processing Unit (CPU) 1301, which includes a high-performance processor responsible for handling data processing, running ITS applications, and managing communication tasks. Accompanying the CPU is memory, comprising both RAM for temporary data storage and processing, and non-volatile memory (such as flash storage) for storing firmware, software, and data logs.

The Communication Interfaces 1302 are crucial for enabling the ITS station to interact with other vehicles and infrastructure. These interfaces include wireless communication modules like the DSRC (Dedicated Short-Range Communications) module, which typically utilizes the IEEE 802.11 p standard (ITS-G5 in Europe) for V2V (Vehicle-to-Vehicle) and V2I (Vehicle-to-Infrastructure) communications. Additionally, a cellular communication module supports LTE, 5G, or other cellular standards for long-range communication, facilitating V2N (Vehicle-to-Network) and V2P (Vehicle-to-Pedestrian) interactions. The antenna system includes multiple antennas designed for different frequency bands, supporting DSRC, GPS, and cellular communications, with MIMO (Multiple Input Multiple Output) technology to enhance signal quality and range.

For accurate positioning, the ITS station includes a Positioning System 1303, typically featuring a GNSS (Global Navigation Satellite System) receiver that supports systems like GPS, GLONASS, or Galileo, providing precise location, velocity, and timing information. This is complemented by an Inertial Measurement Unit (IMU), which includes accelerometers and gyroscopes that offer additional data for dead reckoning, enhancing positioning accuracy in areas with poor satellite coverage.

The station is also equipped with Sensor Interfaces 1304 that allow integration with various vehicle sensors. These interfaces connect to onboard cameras for visual data input, radar or LIDAR systems for distance and object detection, and environmental sensors that provide data on weather, temperature, and other conditions relevant to ITS applications.

Security is a critical aspect of the ITS station, managed by Security Modules 1305 such as the Hardware Security Module (HSM) and Trusted Platform Module (TPM). The HSM is a dedicated chip that performs encryption, decryption, and digital signature operations, ensuring secure communication and handling the secure storage of cryptographic keys. The TPM provides additional secure storage for keys and ensures the system's integrity through secure boot processes.

The Power Supply Unit (PSU) 1306 is designed to interface with the vehicle's power system, typically operating at 12V or 24V DC. It includes protection circuits for voltage regulation, noise filtering, and a battery backup to maintain operation during short power interruptions or to allow safe shutdown of the system.

Networking within the vehicle and with external entities is facilitated by Networking Hardware 1307 such as Ethernet interfaces for wired connections and a CAN (Controller Area Network) bus interface for real-time data exchange with the vehicle's subsystems. The station may also include Wi-Fi and Bluetooth modules for short-range wireless communication within the vehicle or with nearby devices.

For data storage, the ITS station uses Non-volatile Storage 1308, such as SSDs or flash storage, for long-term storage of logs, maps, and application data, and Volatile Storage (RAM) for processing tasks and temporary data handling.

Finally, to manage heat generated by the CPU and other components, the ITS station employs a Cooling System 1309. This system may include passive cooling solutions like heat sinks, as well as active cooling methods such as fans or liquid cooling systems, depending on the performance requirements and the operating environment of the station.

Figure 14 illustrates an example of an ITS entity 1400 in which some embodiments of the invention may be implemented is illustrated. The analytic module 1410 is connected to one or more sensors 1420 such as cameras, LIDAR, and optionally radar (not represented). These sensors may be fixed, for instance, installed at a road junction as part of a roadside ITS station, or embedded within a vehicle. In the latter case, the set of sensors may additionally comprise a GNSS receiver and/or an Inertial Measurement Unit (IMU) to provide a position of the ITS station.

The data obtained from each sensor are analyzed to detect surrounding objects, which are then processed by a sensor data fusion module 1411. This module combines information from multiple sensors, provided there is sufficient confidence that they are observing the same object (analyzing features such as object type, position, speed, trajectory, etc.). Newly detected objects, as well as updates for already tracked objects, are used to refresh the environment model 1412. The environment model maintains a dynamic list of tracked objects, each characterized by:
- a unique identifier for object tracking,
- a timestamp for the measurement associated with the object,
- a record of which sensors have detected the object,
- the object's relative distance and speed with respect to the ITS station's reference position, along with corresponding confidence levels,
- the type of object (e.g., vehicle, pedestrian, etc.), with an associated confidence level,
- and, if available, an associated ITS station identifier, also with an associated confidence level.

When the ITS station is mobile (e.g., associated with a vehicle or pedestrian), the onboard sensors are additionally used to determine the ITS station's own position. A standard GNSS receiver may provide approximate localization with a few meters of accuracy, while high-precision GNSS solutions can achieve centimeter-level accuracy but are less commonly deployed due to higher cost. Moreover, other sensors such as cameras may assist in relative positioning by referencing road features like lane markings and traffic signs. This information enables precise vehicle localization within specific road lanes.

Optionally, the sensor data fusion module may also process information from ITS messages, such as CAM messages or other ITS message types received by the ITS station. As with local sensor fusion, if there is sufficient confidence that a locally perceived object corresponds to an ITS station identified in a received CAM message, the environment model associates that tracked object with the ITS station identifier extracted from the CAM message. The fusion module computes a confidence level for each association, for example based on comparing positional accuracy between the CAM data and local sensor measurements, or by evaluating the ratio of perceived objects to transmitting ITS stations in the vicinity.

The situation analysis module 1413 continuously monitors the trajectories of the objects contained within the environment model and predicts their future paths to assess potential collision risks. Optionally, this module may also incorporate additional contextual information 1414, such as current traffic conditions (e.g., congestion, traffic light status, speed limits), road works, or weather conditions, into its prediction algorithms. As a result of this analysis, the situation analysis module may update the environment model with one or more of the following elements:
- predicted trajectories of objects,
- evaluations of object safety situations (e.g., collision risk or pre-crash conditions),
- and the generation of relevant events.

If necessary, the ITS station 1430 may transmit a DENM message to broadcast a warning, triggered by the situation analysis module. In addition, the ITS station 1430 may periodically transmit CPM messages that include a list of perceived objects derived from the environment model.

While the present invention has been described with reference to embodiments, it is to be understood that the invention is not limited to the disclosed embodiments. It will be appreciated by those skilled in the art that various changes and modification might be made without departing from the scope of the invention, as defined in the appended claims. All of the features disclosed in this specification (including any accompanying claims, abstract and drawings), and/or all of the steps of any method or process so disclosed, may be combined in any combination, except combinations where at least some of such features and/or steps are mutually exclusive. Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

In the preceding embodiments, the functions described may be implemented in hardware, software, firmware, or any combination thereof. If implemented in software, the functions may be stored on or transmitted over, as one or more instructions or code, a computer-readable medium and executed by a hardware-based processing unit.

Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fibre optic cable, twisted pair, digital subscriber line (DSL), or wireless technologies such as infrared, radio, and microwave, then the coaxial cable, fibre optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

## Claims

1. A **method** of communication in an Intelligent Transport System, ITS, the method comprising, at an ITS station associated with a mobile object:
∘ acquiring status information relating to the mobile object from an element of a perception message received from an ITS station generating perception messages, wherein the element is identifiable using association information.

2. A method of communication in an Intelligent Transport System, ITS, the method comprising, at an ITS station generating perception messages:
o sending a perception message including an element carrying status information relating to a mobile object, wherein the element is identifiable by an ITS station associated with the mobile object using association information.

3. The method of claim 1 or 2, wherein the status information includes a position of the mobile object, the position being within an area where GNSS connectivity is degraded or absent.

4. The method of claim 3, wherein the position included in the status information is more accurate than a position determined by the mobile object, based, in part or in whole, on GNSS-based techniques.

5. The method of any of the preceding claims, wherein the association information is information that allows identification of an element of a perception message corresponding to the mobile object.

6. The method of any of the preceding claims, wherein the association information is information that is generated by either the ITS station associated with the mobile object or the ITS station generating perception messages, before being shared with the other, or is information that unambiguously identifies the ITS station associated with the mobile object or the mobile object itself and is directly used by the ITS station generating perception messages.

7. The method of any of the preceding claims, wherein the association information is contained in, referenced by, or referencing the element corresponding to the mobile object within the perception message.

8. The method of any of the preceding claims, wherein the association information is at least one of: an identifier of the ITS station associated with the mobile object used to send ITS messages, a newly defined identifier to be used in scenarios where GNSS connectivity is degraded or absent, or a past trajectory information relating to the mobile object.

9. The method of any of the preceding claims, wherein the element corresponding to the mobile object within the perception message is either a data frame individually describing the mobile object, a data frame globally describing the mobile object along with other perceived objects, or a data field within the perception message.

10. The method of any of the preceding claims, wherein the perception message is a basic ITS CPM message as specified in ETSI TS 103 324 (v2.1.1, 2023), or an enhanced ITS CPM message retaining the structure of the basic CPM message, while incorporating one or more additional data elements.

11. The method of any of the preceding claims, wherein acquiring status information comprises extracting the status information as is from the received perception message, or applying processing to the content of the element corresponding to the mobile object.

12. The method of claim 1, wherein the method further includes sending a message for requesting positioning assistance, in response to determining a degradation or absence of GNSS connectivity.

13. The method of claim 12, wherein determining a degradation or absence of GNSS connectivity comprises receiving a basic or an enhanced DENM message, as specified in ETSI TS 103 831 (V2.2.1, 2024), the message including information elements indicating the presence of an area where GNSS connectivity is degraded or absent.

14. The method of claim 12, wherein the method further includes, after sending the message for requesting positioning assistance and subsequently receiving a perception message from the ITS station generating perception messages, sending a reply message to the ITS station generating perception messages indicating whether an association with the ITS station generating perception messages has been established.

15. The method of claim 2, wherein the method further includes receiving a message for requesting positioning assistance from the ITS station associated with the mobile object, in response to sending a service announcement message.

16. The method of claim 15, wherein the service announcement message is a basic or an enhanced IVIM message, as specified in ETSI TS 103 301 (V2.2.2, 2024), the message including information elements relating to the presence of an area where GNSS connectivity is degraded or absent.

17. The method of claim 15, wherein the method further includes, after receiving the message for requesting positioning assistance, sending a reply message to the ITS station associated with the mobile object indicating whether an association with the ITS station associated with the mobile object has been established.

18. The method of claims 12 and 14, wherein the association information is generated by the ITS station associated with the mobile object, and shared, using the reply message, with the ITS station generating perception messages.

19. The method of claims 15 and 17, wherein the association information is generated by the ITS station generating perception messages, and shared, using the reply message, with the ITS station associated with the mobile object.

20. A processing device configured to perform a method according to any one of claims 1 to 19.

21. A computer program comprising instructions which, when the program is executed by a computer, cause the computer to carry out a method according to any one of claims 1 to 19.

22. A computer-readable medium carrying a computer program according to claim 21.
